# DEMANDE DE BREVET EUROPEEN

(11) **EP 4 199 190 A2**
(43) Date de publication de la demande: **21.06.2023**
(21) Numéro de dépôt: 22208232.3
(22) Date de dépôt: 18.11.2022
(51) Int. Cl.: H01M 10/643, H01M 10/655, H01M 10/6567, H01M 50/207, H01M 50/213

(54) **ENVELOPPE POUR MODULE DE BATTERIE OU PACK-BATTERIE, À MEMBRANE ÉTANCHE DESTINÉE À PERMETTRE UNE CIRCULATION D'UN FLUIDE CALOPORTEUR EN SON SEIN POUR LE REFROIDISSEMENT OPTIMAL DES ACCUMULATEURS DU MODULE OU DU PACK, EN LAISSANT DÉGAGÉES LES BORNES DE SORTIE**

(30) Priorité: 23.11.2021 FR 2112402
(71) Demandeur: Commissariat à l'énergie atomique et aux énergies alternatives, 75015 Paris (FR)
(72) Inventeur: DREVARD, Pascal, 38054 GRENOBLE CEDEX 09 (FR); DE PAOLI, Lionel, 38054 GRENOBLE CEDEX 09 (FR); MEE, Fabrice, 38054 GRENOBLE CEDEX 09 (FR)
(74) Mandataire: Cabinet Nony

(57) **Abrégé**

Enveloppe pour module de batterie ou pack-batterie, à membrane étanche destinée à permettre une circulation d'un fluide caloporteur en son sein pour le refroidissement optimal des accumulateurs du module ou du pack, en laissant dégagées les bornes de sortie.

L'invention concerne une enveloppe (10), pour module (M) de batterie comprenant une pluralité d'accumulateurs (A1, A2, ...) à emballage rigide sous la forme d'un boitier, l'enveloppe comprenant une membrane étanche (11) délimitant un volume (V) de liquide caloporteur au plus près de chaque accumulateur du module, la membrane étant percée d'une ouverture (12) d'amenée du liquide caloporteur, d'une ouverture (13) d'évacuation du liquide caloporteur, et d'une pluralité d'ouvertures (14) de maintien et d'étanchéité dont la périphérie de chacune est délimitée par une lèvre d'étanchéité souple (15) adaptée pour positionner et maintenir un des accumulateurs et garantir l'étanchéité autour de son boitier, chaque lèvre d'étanchéité étant destinée à être agencée pour laisser dégagée au moins une borne de sortie d'un des accumulateurs, en dehors du volume de liquide caloporteur.

## Description

### Domaine technique

La présente invention concerne le domaine des accumulateurs électrochimiques, et plus particulièrement à des accumulateurs métal-ion.

L'invention vise principalement à proposer une solution fiable pour le refroidissement des accumulateurs d'un module ou d'un pack-batterie.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un module ou pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

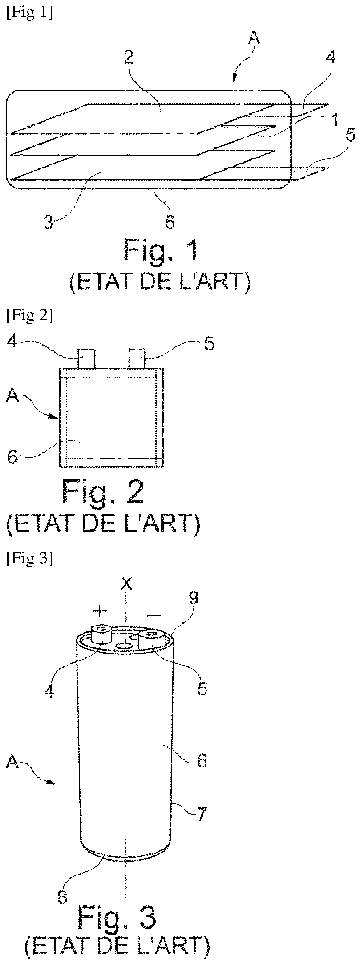

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂. L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

Un des types de boitier rigide de forme cylindrique, usuellement fabriqué pour un accumulateur Li-ion de forte capacité, est illustré en figure 3.

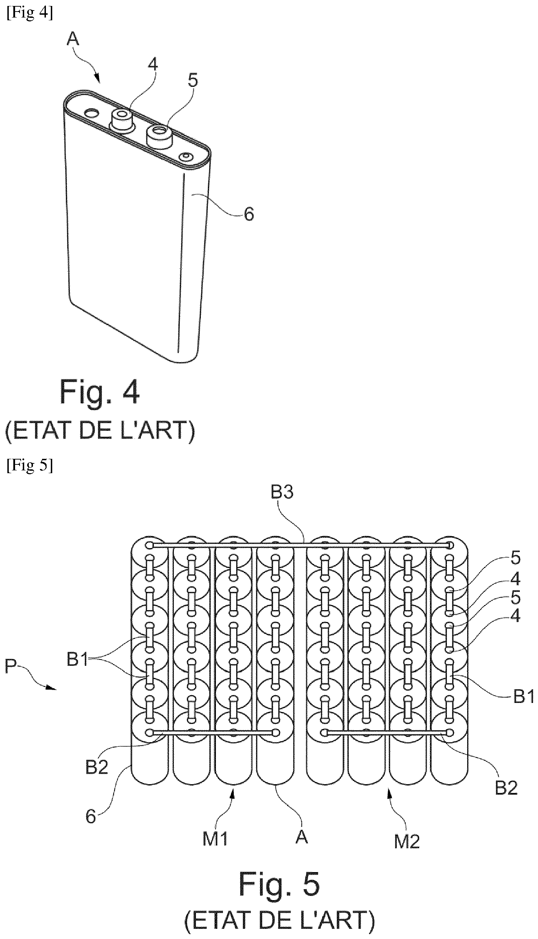

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais *«Thermal Runaway»*)*.* Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Au niveau d'une cellule (accumulateur), les différents dispositifs internes de protection connus sont:
- un dispositif à coefficient de température positif (PTC acronyme anglo-saxon pour « *Polymeric positive Temperature Coefficient* ») : actuellement, un grand nombre d'accumulateurs cylindriques déjà commercialisés en sont munis. Un tel dispositif se présente sous la forme d'un anneau en polymère (polyéthylène) laminé avec un métal. En cas de surcharge, ce polymère chauffe, change de phase, devient plus résistif et limite ainsi le passage du courant ;
- un dispositif d'interruption du courant (CID pour « *current interruption device* ») : il interrompt le courant si la pression du gaz dans la cellule dépasse les limites spécifiées ;
- un dispositif coupe circuit (en anglais « *shutdown* ») qui empêche la génération de courants élevés ;
- un évent constitué d'une soupape ou d'un disque de rupture, qui s'ouvre lorsque la pression augmente brutalement, et dépasse une pression critique déterminée, afin d'éviter l'explosion de la cellule ;
- un fusible thermique, actuellement mis en œuvre dans les accumulateurs de grande capacité, qui coupe le courant dès lors que la température dans l'accumulateur est trop élevée.

Dans une batterie, ou pack-batterie à plusieurs accumulateurs Li-ion, la mise en série ou parallèle d'accumulateurs plus ou moins différents peut avoir des conséquences sur la performance résultante du pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le cœur et les bords du pack, gradient de courant...).

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet. Cela se traduit par la diminution de la capacité totale utilisable du pack batterie.

A l'échelle du module et du pack, typiquement en dessous de 0°C par exemple, il peut être nécessaire d'avoir recours à un BMS, afin de limiter la puissance demandée au pack afin d'éviter une dégradation des accumulateurs particulièrement pour la charge de la batterie. On rappelle ici que le BMS (acronyme anglais de « *Battery Management System* ») est utilisé afin de protéger les éléments de facteurs augmentant leur dangerosité, tel des courants trop élevés, des potentiels non adaptés (trop élevés ou trop faibles), des températures limites. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, généralement un court-circuit interne, qui peut conduire à l'extrême à l'explosion du pack. Dans ce cas, il est également nécessaire d'avoir recours au BMS, afin de protéger les accumulateurs.

La difficulté intervient pour assurer l'uniformité de la température au sein d'un pack-batterie. Par conséquent, ces considérations thermiques imposent généralement une régulation de la température des accumulateurs d'un pack batterie.

Diverses stratégies de gestion thermique sont proposées pour optimiser les systèmes de refroidissement intégré et permettre au pack de batteries de fonctionner à une température ambiante cible et d'assurer une homogénéité de la température des cellules. Le système de gestion thermique doit donc être capable de réagir, et de manière très précise, si un gradient de température est observé au niveau des cellules le constituant.

Parmi les solutions connues pour tenter d'assurer une homogénéité de température au sein d'un module de batterie ou d'un pack-batterie, les solutions où on fait circuler un fluide caloporteur (gazeux ou liquide) au sein du module ou du pack sont les plus répandues.

Le fluide caloporteur peut être de l'air ou un liquide de refroidissement à la place de l'air. Un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de la faible inertie thermique Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on peut donc obtenir des accumulateurs dont la température est inhomogène ou dont le refroidissement est insuffisant pour limiter le risque d'emballement.

Les solutions par refroidissement liquide sont nettement plus efficaces en termes d'échanges thermiques: elles consistent en un refroidissement direct par conduction thermique à l'aide d'un liquide, de préférence diélectrique.

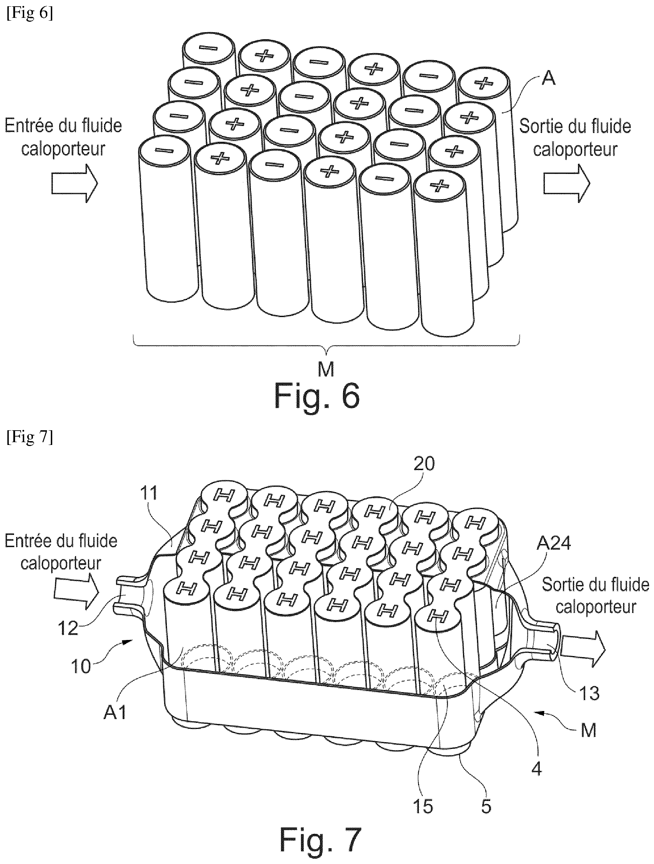

On a représenté schématiquement à la figure 6, le principe d'un refroidissement par fluide d'un module de batterie M qui circule en son sein. Le fluide caloporteur qui entre par un côté latéral du module vient directement au contact des accumulateurs A de géométrie cylindrique alignés pour ressortir sur le côté latéral opposé.

Plusieurs dispositifs mettent en œuvre ce principe selon différentes options.

Une première option consiste à immerger totalement les accumulateurs du module ou du pack dans un boitier étanche. On peut citer ici la demande de brevet WO2020/100152A1 et le modèle d'utilité CN210866429U. Une immersion totale des accumulateurs est intéressante du point de vue des échanges thermiques. Mais, les dispositifs connus nécessitent tous la mise en œuvre d'un boitier devant supporter une pression plus ou moins importante selon la viscosité du fluide tout en étant le plus léger possible. La quantité de fluide est à intégrer dans le ratio masse/performance thermique du module/pack. En outre, avec un tel boitier, la maintenance des accumulateurs s'avère bien plus complexe à réaliser. Une deuxième option consiste à réaliser un cheminement du fluide caloporteur entre les accumulateurs. On peut citer ici les modèles d'utilité CN209357791U et CN210640340U. Le brevet US8877366 également concerne une solution de refroidissement par liquide s'écoulant dans des tubulures externes qui refroidissent par conduction thermique des ailettes insérées entre des accumulateurs.

Une régulation au plus près des accumulateurs qu'ils soient de géométrie cylindrique ou prismatique permet de réduire la forme au plus près du boitier et par-là sa masse, par une encapsulation en forme de serpentins ou au moyen d'une poche souple. L'inconvénient de cette deuxième solution est que l'échange thermique n'est pas réalisé directement en contact avec les accumulateurs. De l'air transite et dégrade la qualité de l'échange.

Enfin, une dernière option consiste à implanter une plaque de refroidissement sur au moins un côté d'un module ou pack-batterie, comme divulgué dans la demande FR3085542A1 ou le CN109149009B. Cette solution est simple à mettre en œuvre car la plaque de refroidissement régule une surface conductrice commune à tout un module d'accumulateurs. L'inconvénient majeur de troisième est similaire à une solution par immersion totale : la masse de la plaque de refroidissement doit être prise en considération dans le compromis à réaliser entre régulation thermique et gain en performance. En outre, du fait des contraintes d'encombrement et de masse, le refroidissement est souvent réalisé sur une seule surface commune du module.

Il existe donc un besoin pour améliorer les solutions de refroidissement de pack-batterie, notamment afin qu'elles soient optimisées en termes de poids et d'encombrement pour préserver les performances du pack.

Le but de l'invention est de répondre au moins en partie à ce(s) besoin(s).

### Exposé de l'invention

Pour ce faire, l'invention concerne, sous l'un de ses aspects, une enveloppe, pour module de batterie comprenant une pluralité d'accumulateurs à emballage rigide sous la forme d'un boitier, l'enveloppe comprenant une membrane étanche délimitant un volume de liquide caloporteur au plus près de chaque accumulateur du module, la membrane étant percée d'une ouverture d'amenée du liquide caloporteur, d'une ouverture d'évacuation du liquide caloporteur, et d'une pluralité d'ouvertures de maintien et d'étanchéité dont la périphérie de chacune est délimitée par une lèvre d'étanchéité souple adaptée pour positionner et maintenir un des accumulateurs et garantir l'étanchéité autour de son boitier, chaque lèvre d'étanchéité étant destinée à être agencée pour laisser dégagée au moins une borne de sortie d'un des accumulateurs, en dehors du volume de liquide caloporteur.

Selon une variante de l'invention, la membrane est en au moins un matériau élastomère souple, de préférence choisi parmi un caoutchouc, un silicone, le nitrile (NBR).

Alternativement, la membrane est en au moins un matériau rigide, de préférence choisi parmi le polyéthylène (PE), le polyétherimide (PEI), le polyétheréthercétone (PEEK), le polytéréphtalate de butylène (PBT), à l'exception des lèvres d'étanchéité en au moins un matériau polymère souple, de préférence choisi parmi un silicone, un élastomère thermoplastique (TPE ou TPR), surmoulées sur le matériau rigide.

Avantageusement, le profil des lèvres d'étanchéité définit des surfaces planes de contact direct selon la hauteur des accumulateurs.

Selon un mode de réalisation avantageux, le ratio entre la surface développée de la surface de contact d'une lèvre d'étanchéité, définie par sa hauteur, avec un accumulateur et la surface d'extrémité de ladite lèvre est au moins égal à 7.

Selon ce mode et une configuration avantageuse, la surface développée définie par la hauteur de la lèvre d'étanchéité correspond à 7 fois la surface de l'extrémité de celle-ci.

Avec cette configuration, on peut optimiser les paramètres de la lèvre d'étanchéité comme suit:
- un ajustement de serrage d'un accumulateur correspond à 93% de son diamètre avec un matériau souple de réalisation de la lèvre d'étanchéité d'une dureté égale de l'ordre de 50 shore, inférieure à 55 shore;
- une pression relative au sein du circuit de liquide caloporteur en fonctionnement de l'ordre de 200mbars. En effet, le fluide caloporteur est régulé par un flux continu, légèrement supérieur à la pression atmosphérique. Typiquement, avec 200mbars de pression relative au sein du circuit fermé, la régulation thermique devient efficace sans sollicitations excessives sur les lèvres d'étanchéité et de manière plus générale sur les parties élastiques de la membrane étanche.

Selon un autre mode de réalisation avantageux, les ouvertures de maintien et d'étanchéité sont agencées deux-à-deux, l'une en regard de l'autre de sorte à ce qu'un de la pluralité des accumulateurs soit positionné et maintenu par les deux lèvres d'étanchéité des ouvertures en regard.

Les ouvertures de maintien et d'étanchéité peuvent être de section cylindrique ou prismatique, destinées à positionner et maintenir des accumulateurs de géométrie respectivement cylindrique ou prismatique.

De préférence, les lèvres d'étanchéité souples sont agencées à l'intérieur du volume. L'invention a également pour objet un pack-batterie comprenant au moins un module comprenant:
- une pluralité d'accumulateurs de géométrie prismatique comprenant chacun au moins une cellule électrochimique C formée d'une cathode, d'une anode et d'un électrolyte intercalé entre la cathode et l'anode, et un boitier agencé pour contenir avec étanchéité la cellule électrochimique et deux bornes de sortie faisant saillie du couvercle et/ou du fond du boitier;
- au moins une enveloppe telle que décrite précédemment, dont les lèvres d'étanchéité sont agencées pour laisser dégagée au moins une borne de sortie de chacun des accumulateurs, en dehors du volume de liquide caloporteur.

Dans le cadre de l'invention, le liquide caloporteur est avantageusement diélectrique mais peut être également électriquement conducteur. Par exemple, le liquide caloporteur peut être de l'eau.

Avantageusement, chaque accumulateur du module est positionné et maintenu par ajustement serré d'au moins une des lèvres d'étanchéité, de préférence d'au moins deux lèvres d'étanchéité.

Selon un mode de réalisation avantageux, le module comprend un boitier rigide solidaire d'au moins une partie de la membrane.

Selon une configuration avantageuse, le module comprend deux enveloppes agencées côte-à-côte avec une paroi centrale commune, chaque accumulateur étant positionné et maintenu par ajustement serré de deux lèvres d'étanchéité par membrane, le boitier rigide encapsulant au moins les faces des deux membranes desquelles les bornes de sortie des accumulateurs font saillie.

Le boitier rigide peut supporter des busbars de connexion entre les bornes de sortie des accumulateurs, de préférence sous la forme de clinquants, et/ou des liaisons électriques d'instrumentation, telles que pour des sondes de température.

Selon un agencement avantageux, l'ouverture d'évacuation du liquide caloporteur d'une des deux enveloppes est directement reliée à l'ouverture d'amenée du liquide caloporteur de l'autre des deux enveloppes de sorte à avoir une circulation fluidique en série du liquide caloporteur.

Ainsi, l'invention consiste essentiellement à proposer une enveloppe à membrane au moins en partie souple qui permet à elle seule un positionnement et maintien des accumulateurs d'un module ou pack-batterie tout en réalisant l'étanchéité autour de chacun des accumulateurs par des lèvres intégrées dans la membrane, afin de réaliser un refroidissement par immersion totale de la majeure partie des accumulateurs dans un liquide caloporteur. La régulation thermique des accumulateurs est donc amenée par le liquide caloporteur qui circule à l'intérieur du volume étanche délimité par la membrane et au contact direct des parois latérales de boitiers des accumulateurs.

La quantité du fluide caloporteur qu'il est nécessaire d'amener est donc restreinte à l'intérieur du module de batterie, ce qui permet, comparativement aux solutions selon l'état de l'art, un gain de masse globale et une diminution des contraintes mécaniques.

Les extrémités des accumulateurs qui supportent les bornes de sortie des accumulateurs sont agencées en dehors du volume de liquide caloporteur délimité par l'enveloppe. Autrement dit elles sont dégagées physiquement du circuit de fluide caloporteur et permet avantageusement de laisser complètement accessibles les liaisons et connexions électriques entre accumulateurs ou vers l'extérieur du module ou pack-batterie. Cela est avantageux pour les opérations d'intervention sur le module ou pack-batterie à la fois lors de l'assemblage et lors d'une maintenance, mais aussi lors d'un recyclage du module ou du pack.

Au final, l'invention apporte de nombreux avantages parmi lesquels on peut citer:
- un refroidissement par immersion totale d'accumulateurs d'un module ou pack-batterie par un composant monolithique qui réalise à la fois le positionnement, le maintien des accumulateurs mais également l'étanchéité individualisée autour de chaque accumulateur ;
- une solution de refroidissement d'un module ou pack-batterie à masse faible ajoutée ;
- un échange thermique entre accumulateurs et liquide caloporteur dans un volume optimisé à faible pression au sein de l'enveloppe à membrane ;
- une accessibilité aisée des extrémités des accumulateurs supportant les bornes de sortie ;
- une liberté de petits déplacements qui est individualisée pour chaque accumulateur, selon un différentiel dimensionnel qu'il soit statique (accumulateurs au repos) ou dynamique (cycles de charges/décharges). Cette liberté est avantageuse car elle n'engendre ni tension ni contraintes mécaniques des accumulateurs qui pourraient dégrader la tenue de l'étanchéité autour de chaque accumulateur.

Pour une application à un module ou un pack-batterie Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en en perspective d'un accumulateur lithium-ion selon l'état de l'art avec son emballage rigide constitué d'un boitier de forme prismatique.
[Fig 5] la figure 5 est une vue en perspective d'un assemblage au moyen de busbars d'accumulateurs lithium-ion selon l'état de l'art, formant un pack-batterie.
[Fig 6] la figure 6 est une vue en perspective d'un module de pack-batterie selon l'état de l'art refroidi par un liquide de refroidissement dans lequel le module est complètement immergé.
[Fig 7] la figure 7 est une vue en perspective et en arraché partiel d'un module de pack-batterie à accumulateurs cylindriques, équipé d'une enveloppe à membrane souple selon un mode de réalisation de l'invention ; la figure 7 illustrant une circulation du liquide caloporteur au sein de l'enveloppe.
[Fig 8] la figure 8 reprend la figure 7 en montrant en détail l'agencement relatif entre les différentes portions de la membrane souple et les accumulateurs du module.
[Fig 9] la figure 9 est une vue en perspective et en arraché de la membrane souple selon les figures 7 et 8.
[Fig 10] la figure 10 est une vue en perspective de détail du module selon les figures 7 et 8, montrant le positionnement et maintien des accumulateurs du module par des lèvres d'étanchéités de la membrane souple.
[Fig 11] la figure 11 est une vue en perspective de détail du module selon les figures 7 et 8, montrant la hauteur d'un lèvre d'étanchéité de la membrane souple en contact autour d'un accumulateur du module.
[Fig 12] la figure 12 est une vue en perspective et en coupe du dessus, montrant la surface d'extrémité d'un lèvre d'étanchéité de la membrane souple autour d'un accumulateur du module.
[Fig 13] la figure 13 est une vue en perspective et en arraché partiel d'une variante de réalisation d'une enveloppe à membrane rigide et avec des lèvres d'étanchéité souple autour des accumulateurs d'un module.
[Fig 14] la figure 14 est une vue en perspective et en arraché partiel d'un module de pack-batterie à accumulateurs cylindriques, équipé d'une enveloppe à membrane souple selon un autre mode de réalisation de l'invention.

### Description détaillée

Les figures 1 à 6 sont relatives à des exemples différents d'accumulateur Li-ion, d'emballages souples et boitiers d'accumulateurs ainsi qu'un module de pack-batterie selon l'état de l'art refroidi par une circulation de liquide de caloporteur au sein du module.

Ces figures 1 à 6 ont déjà été commentées en préambule et ne le sont donc pas plus ci-après. Par souci de clarté, les mêmes références désignant les mêmes éléments selon l'état de l'art et selon l'invention sont utilisées pour toutes les figures 1 à 14.

Dans l'ensemble de la présente demande, les termes « inférieur », « supérieur », « bas », « haut », « dessous » et « dessus » sont à comprendre par référence par rapport à des boitiers d'accumulateurs Li-ion agencés à la verticale.

On a représenté en figures 7 à 9, un premier exemple d'enveloppe 10 de circulation de liquide de refroidissement selon l'invention qui équipe un module M d'un pack-batterie d'accumulateurs Li-ion, A1, A2,...,A24.

Dans les exemples illustrés, les accumulateurs A1-A24 illustrés sont à boitiers 6 de format cylindrique, typiquement de format 18650 ou 21700.

Les accumulateurs A1-A24 sont positionnés et maintenus par la membrane étanche 11 de l'enveloppe 10 comme décrit par la suite.

La membrane étanche 11 délimite un volume V de liquide caloporteur au plus près de chaque accumulateur du module.

La membrane étanche 11 est percée d'une ouverture 12 d'amenée du liquide caloporteur, d'une ouverture 13 d'évacuation du liquide caloporteur, et d'une pluralité d'ouvertures 14 de maintien et d'étanchéité des accumulateurs.

La périphérie de chacune de ces ouvertures 14 est délimitée par une lèvre d'étanchéité souple 15 adaptée pour positionner et maintenir un des accumulateurs A1-A24 et garantir l'étanchéité autour de son boitier 6.

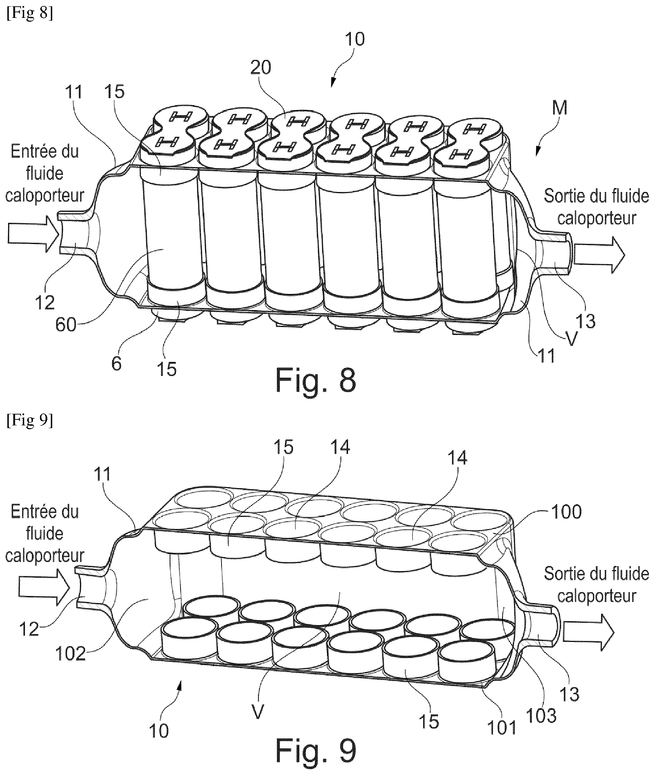

La forme générale de la membrane 11 est montrée à la figure 9 : les ouvertures 14 de maintien et d'étanchéité sont réalisées dans les bords plats longitudinaux 100, 101 reliés entre eux par des collecteurs 102, 103 du liquide caloporteur sur lesquels débouchent les ouvertures d'entrée 12 et d'évacuation 13 du liquide caloporteur.

Comme montré sur les figures 7 et 8, chaque accumulateur A1-A24 est positionné et maintenu par deux lèvres d'étanchéité 15 en regard l'une de l'autre. L'agencement relatif entre un accumulateur donné et les deux lèvres d'étanchéité qui le maintiennent laissent dégager les deux bornes de sortie 4, 5 de l'accumulateur, c'est-à-dire que ces dernières sont agencées en dehors du volume V dans lequel le liquide caloporteur circule.

Autrement dit, la majeure partie 60 de la hauteur du boitier 6 d'un accumulateur est directement en contact avec le liquide caloporteur qui circule à l'intérieur de la membrane souple 11.

Par conséquent, lors du fonctionnement d'un module M, la régulation thermique des accumulateurs A1-A24, est réalisée par le liquide caloporteur qui circule de préférence à faible pression depuis l'ouverture 12 d'amenée du liquide, puis dans le volume V au contact direct de la majeure partie 60 du boitier 6 des accumulateurs, puis ressort par l'ouverture d'évacuation 13.

Les extrémités des boitiers 6 qui intègrent les bornes de sortie positives 4 et négatives 5 sont en dehors de ce circuit de caloporteur et les liaisons et connexions électriques peuvent donc être effectuées indépendamment.

Typiquement, les bornes de sortie positives 4 et négatives 5 des accumulateurs A1-A24 du module M peuvent être connectées entre elles, notamment au moyen de busbars sous la forme de clinquants 20, afin de relier électriquement les différents accumulateurs en série et/ou parallèle par groupes.

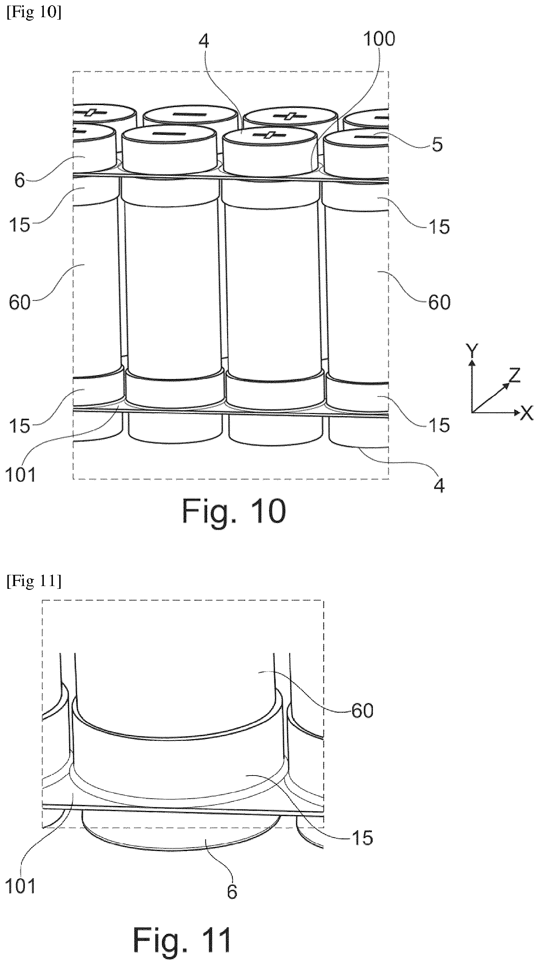

Les figures 10 à 12 illustrent le maintien des accumulateurs et l'étanchéité réalisée par les lèvres souples 15. Le niveau de qualité de cette étanchéité créée par l'ajustement serré entre les boitiers 6 et les lèvres 15, dépend de la surface développée de chaque lèvre 15, par rapport à la surface d'extrémité 150 de cette lèvre. En effet, la pression du fluide exerce un maintien homogène selon ce ratio, ce qui évite le décollement de la lèvre 15 du boitier 6 qu'elle épouse. On rappelle ici que la surface développée est égale à π × D × H où D est le diamètre de l'ouverture 14 (correspondant au diamètre externe Ø du boitier 6 à l'ajustement serré près) et H la hauteur de la lèvre 15.

Avec une membrane souple 11 qui vient d'être décrite, l'étanchéité est assurée autour de chaque accumulateur indépendamment des autres du module. Les lèvres d'étanchéité 15 garantissent un positionnement et un maintien de chaque accumulateur et autorisent pour ce dernier une liberté de petits déplacements dans toutes les directions X, Y, Z comme cela est montré en figure 10. Ces petits déplacements peuvent notamment être occasionnés lors des cycles de charges/décharges des accumulateurs. Ils peuvent également provenir de chocs, d'accélérations subis par le module, en particulier lorsque le module de batterie M est dédié à des applications mobiles. Ainsi, la membrane souple 10 en jouant le rôle d'amortisseur encaisse toutes les sollicitations mécaniques subies par le module M.

Il va de soi que cela nécessite de dimensionner des distances entre ouvertures adjacentes 14 et donc des lèvres d'étanchéité 15 adjacentes qui évitent tout contact mécanique entre deux accumulateurs adjacents au sein d'un même module M.

La membrane souple 11 peut être réalisée en une seule pièce en élastomère par fabrication additive ou par moulage par injection.

A titre d'exemple indicatif, la membrane souple 11 peut être en silicone, avantageusement de dureté 50 shore, d'épaisseur de 2mm à l'exception des lèvres souples 15 d'épaisseur égale à 1,2mm.

Dans l'exemple illustré aux figures 7 à 12, la membrane 11 est en une seule pièce en élastomère d'épaisseur constante pour apporter une souplesse pour la totalité de la pièce.

En cas de besoin, notamment pour des modules de batterie de dimensions plus importantes et/ou pour des formats d'accumulateurs de grandes dimensions, on peut envisager différentes variantes d'apporter une rigidité localisée. En effet, dans les configurations de dimensionnement plus importants, une membrane complètement souple peut s'avérer inadaptée.

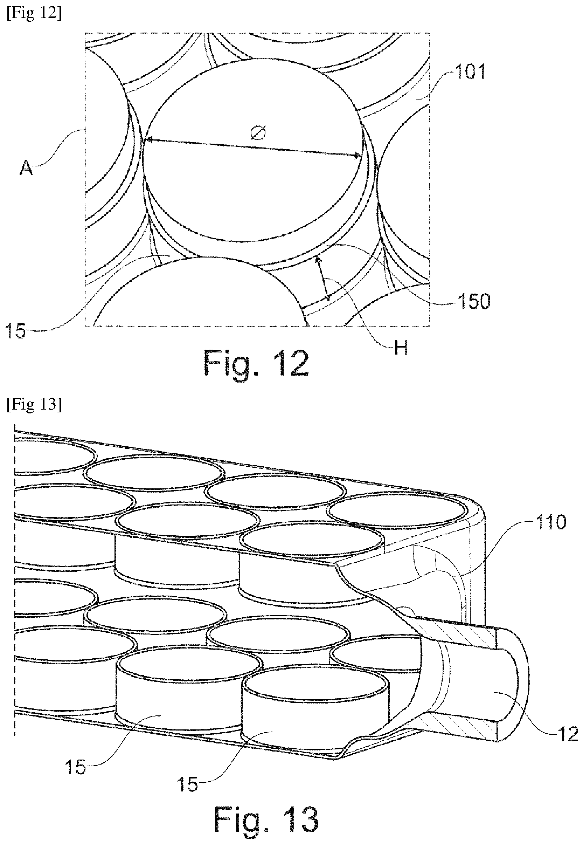

La figure 13 montre un exemple de membrane 110 à rigidité mixte : les bords longitudinaux 100, 101 et les collecteurs de liquide caloporteurs 102, 103 peuvent être rigides ou semi-rigides tandis que seules les lèvres d'étanchéité 15 restent souples. Cette variante d'enveloppe à membrane rigidité différenciée peut être retenue comme une solution d'industrialisation à grande échelle. Elle a l'avantage d'apporter la rigidité localisée recherchée sans ajouter de masse importante à la membrane.

Une autre variante consiste à conserver une membrane 11 complètement souple et à apporter la rigidité recherchée par un boitier externe 30 rapporté à la périphérie de la membrane. Ainsi, ce boitier 30 permet de maîtriser la tenue externe de la membrane souple.

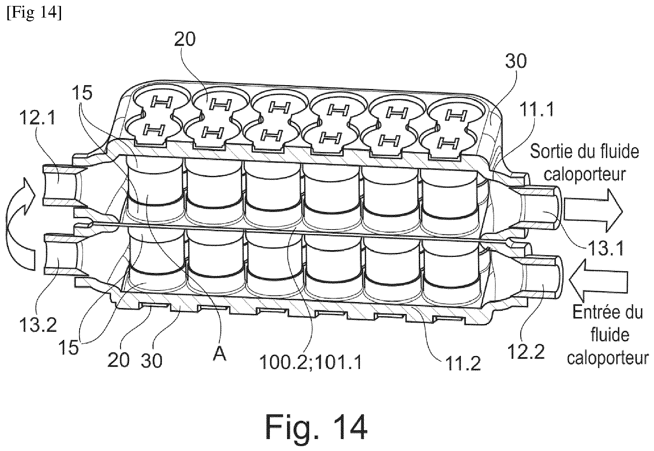

La figure 14 montre est cette autre variante dans une configuration à deux membranes souples 11.1 ; 11.2, de préférence identique, superposées l'une sur l'autre avec un bord longitudinal 100.2 ; 101.1 commun aux deux membranes 11.1 ; 11.2 qui constitue un cloisonnement central.

Le boitier externe 30 entoure complètement les deux membranes 11.1 ; 11.2 superposées en définissant une structure rigide de maintien de l'enveloppe 10 qui intègre l'ensemble des accumulateurs A du module.

Comme visible sur cette figure 14, chaque accumulateur 1 est maintenu et positionné par quatre lèvres d'étanchéité souples 15 dont deux par membrane 11.1 ; 11.2.

Le branchement fluidique entre ces deux membranes 11.1 ; 11.2 peut être réalisé en parallèle ou en série pour contraindre le déplacement du liquide caloporteur dans un volume canalisé à l'intérieur des deux membranes.

La figure 14 montre un branchement fluidique en série : l'ouverture 13.2 d'évacuation du liquide caloporteur de la membrane 11.2 du dessous est directement connectée à l'ouverture 12.1 d'entrée du liquide caloporteur de la membrane 11.1 du dessus.

Le boitier externe 30 peut intégrer des clinquants 20 de connexion électrique entre accumulateurs A et d'instrumentation.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans les exemples illustrés, deux ouvertures 14 avec lèvres d'étanchéité 15 sont nécessaires pour le positionnement et maintien des accumulateurs avec leurs bornes de sortie 4 et 5 à l'extérieur de la longueur délimitée entre ces deux lèvres 15, on peut prévoir une seule ouverture 14 avec une seule lèvre d'étanchéité 15. Dans cette configuration, les bornes de sortie négative et positive sont agencées sur un même côté, par exemple le couvercle d'un boitier accumulateur et le fond du boitier est immergé complètement dans le volume V de liquide caloporteur délimité par la membrane de l'enveloppe.

Si dans les exemples illustrés, les accumulateurs sont à boitier de format cylindrique, l'invention peut bien évidemment s'appliquer à des boitiers d'accumulateurs de format prismatique. Dans ce cas, les ouvertures 14 sont également à section transversale prismatique et les lèvres d'étanchéité 15 conformées pour épouser avec ajustement serré les formats prismatiques. Dans ce cas également, on veille à prendre en considération une déformation des boitiers prismatiques plus importante que des boitiers cylindriques, lors des cycles de charges et de décharges, avec le cas échéant la nécessite de rajouter un dispositif mécanique de compression des accumulateurs.

## Revendications

1. Enveloppe (10), pour module (M) de batterie comprenant une pluralité d'accumulateurs (A1, A2, ...) à emballage rigide sous la forme d'un boitier, l'enveloppe comprenant une membrane étanche (11) délimitant un volume (V) de liquide caloporteur au plus près de chaque accumulateur du module, la membrane étant percée d'une ouverture (12) d'amenée du liquide caloporteur, d'une ouverture (13) d'évacuation du liquide caloporteur, et d'une pluralité d'ouvertures (14) de maintien et d'étanchéité dont la périphérie de chacune est délimitée par une lèvre d'étanchéité souple (15) adaptée pour positionner et maintenir un des accumulateurs et garantir l'étanchéité autour de son boitier, chaque lèvre d'étanchéité étant destinée à être agencée pour laisser dégagée au moins une borne de sortie d'un des accumulateurs, en dehors du volume de liquide caloporteur.

2. Enveloppe (10) selon la revendication 1, la membrane étant en au moins un matériau élastomère souple, de préférence choisi parmi un caoutchouc, un silicone, le nitrile (NBR)

3. Enveloppe (10) selon la revendication 1, la membrane étant en au moins un matériau rigide, de préférence choisi parmi le polyéthylène (PE), le polyétherimide (PEI), le polyétheréthercétone (PEEK), le polytéréphtalate de butylène (PBT), à l'exception des lèvres d'étanchéité en au moins un matériau polymère souple, de préférence choisi parmi , un silicone, un élastomère thermoplastique (TPE ou TPR), surmoulées sur le matériau rigide.

4. Enveloppe (10) selon l'une des revendications 1 à 3, le profil des lèvres d'étanchéité définissant des surfaces planes de contact direct selon la hauteur des accumulateurs.

5. Enveloppe (10) selon l'une des revendications précédentes, le ratio entre la surface développée de la surface de contact d'une lèvre d'étanchéité, définie par sa hauteur, avec un accumulateur et la surface d'extrémité de ladite lèvre étant au moins égal à 7.

6. Enveloppe (10) selon l'une des revendications précédentes, les ouvertures de maintien et d'étanchéité étant agencées deux-à-deux, l'une en regard de l'autre de sorte à ce qu'un de la pluralité des accumulateurs soit positionné et maintenu par les deux lèvres d'étanchéité des ouvertures en regard.

7. Enveloppe (10) selon l'une des revendications précédentes, les ouvertures de maintien et d'étanchéité étant de section cylindrique ou prismatique, destinées à positionner et maintenir des accumulateurs de géométrie respectivement cylindrique ou prismatique.

8. Enveloppe (10) selon l'une des revendications précédentes, les lèvres d'étanchéité souples étant agencées à l'intérieur du volume.

9. Module de batterie (P) comprenant:
- une pluralité d'accumulateurs (A1, A2...A24) comprenant chacun au moins une cellule électrochimique C formée d'une cathode (2), d'une anode (3) et d'un électrolyte intercalé entre la cathode et l'anode, un boitier (6) agencé pour contenir avec étanchéité la cellule électrochimique et deux bornes de sortie (4, 5) faisant saillie du couvercle et/ou du fond du boitier;
- au moins une enveloppe (10) selon l'une des revendications précédentes, dont les lèvres d'étanchéité sont agencées pour laisser dégagée au moins une borne de sortie (4, 5) de chacun des accumulateurs, en dehors du volume de liquide caloporteur.

10. Module de batterie selon la revendication 9, chaque accumulateur étant positionné et maintenu par ajustement serré d'au moins une des lèvres d'étanchéité.

11. Module de batterie selon la revendication 10, chaque accumulateur étant positionné et maintenu par ajustement serré d'au moins deux lèvres d'étanchéité.

12. Module de batterie selon l'une des revendications 9 à 11, comprenant un boitier rigide solidaire d'au moins une partie de la membrane.

13. Module de batterie selon la revendication 12 en combinaison avec la revendication 11, comprenant deux enveloppes agencées côte-à-côte avec une paroi centrale commune, chaque accumulateur étant positionné et maintenu par ajustement serré de deux lèvres d'étanchéité par membrane, le boitier rigide encapsulant au moins les faces des deux membranes desquelles les bornes de sortie des accumulateurs font saillie.

14. Module de batterie selon la revendication 12 ou 13, le boitier rigide supportant des busbars de connexion entre les bornes de sortie des accumulateurs, de préférence sous la forme de clinquants, et/ou des liaisons électriques d'instrumentation, telles que pour des sondes de température.

15. Module de batterie selon la revendication 13 ou 14, l'ouverture d'évacuation du liquide caloporteur d'une des deux enveloppes étant directement reliée à l'ouverture d'amenée du liquide caloporteur de l'autre des deux enveloppes de sorte à avoir une circulation fluidique en série du liquide caloporteur.

16. Module de batterie selon l'une des revendications 9 à 15, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.
